# EUROPÄISCHE PATENTANMELDUNG

(11) **EP 1 081 582 A1**
(43) Veröffentlichungstag der Anmeldung: **07.03.2001**
(21) Anmeldenummer: 00117238.6
(22) Anmeldetag: 14.08.2000
(51) Int. Cl.: G06F 3/023

(54) **Verfahren und Vorrichtung zur Auswahl alphanumerischer Datensätze**

(30) Priorität: 03.09.1999 DE 19941949
(71) Anmelder: Volkswagen Aktiengesellschaft, 38436 Wolfsburg (DE)
(72) Erfinder: Crull, Torsten, 38106 Braunschweig (DE); Heimermann, Matthias, 38302 Wolfenbüttel (DE)

(57) **Zusammenfassung**

Die Erfindung betrifft ein Verfahren und eine Vorrichtung zur Auswahl alphanumerischer Datensätze, insbesondere zur Zielauswahl für Navigationssysteme oder Rufnummernauswahl für Telefonsysteme, umfassend einen Prozessor, einen Datenspeicher mit abgelegten Datensätzen, eine Anzeigeeinheit (1) und eine Eingabeeinheit, wobei der Prozessor einen Suchalgorithmus umfaßt, mittels dessen in Abhängigkeit von einer alphanumerischen Zeicheneingabe über die Eingabe der Datenspeicher nach möglichen Datensätzen durchsuchbar ist, wobei in Abhängigkeit von Suchergebnis der Eingabemodus auf der Anzeigeeinheit (1) zwischen einer sukzessiven alphanumerischen Zeicheneingabe und einer Listenauswahl wechselbar ist.

## Beschreibung

Die Erfindung betrifft ein Verfahren und eine Vorrichtung zur Auswahl alphanumerischer Datensätze, insbesondere zur Zielauswahl für Navigationssysteme oder Rufnummernauswahl für Telefonsysteme.

Aus der EP 0 366 132 B1 ist eine Multifunktionsbedieneinrichtung für Kraftfahrzeuge bekannt, bei der die Auswahl von Funktionsgruppen (Menüs) und die Auswahl individueller Funktionen mittels Drehschaltern erfolgt und bei der eine Enter - Funktion auslösbar ist, wobei ein und derselbe bidirektionale Drehschalter zur Menü - Auswahl und individuellen Funktionsauswahl dient, der Drehschalter Raststellungen besitzt, wobei den Raststellungen Menüs oder einzelne Funktionen zugeordnet sind und die Enter - Funktion durch eine Axialbewegung des Drehschalters auslösbar ist. Zur Eingabe von Buchstabenfolgen für ein Navigationssystem wird auf einer Anzeigeeinheit ein Alphabet dargestellt, wobei den Raststellungen jeweils ein Buchstabe zugeordnet ist. Über den Drehschalter kann dann ein gewünschter Buchstabe ausgewählt und durch die Enter - Funktion in das Navigationssystem übernommen werden. Weiter wird vorgeschlagen, daß in einem zugeordneten Speicher die möglichen Buchstabenfolgen abgelegt sind, wie beispielsweise Städte - und Straßennamen für ein Navigationssystem. Nach der Eingabe eines ersten Buchstabens werden in dem Alphabet die Buchstaben optisch hervorgehoben, die gemäß der vorhandenen Datensätze als zweiter Buchstabe folgen können. Dieses Verfahren wird für die einzelnen Buchstaben sukzessive durchgeführt. Ist der mögliche Buchstabe eindeutig, so ergänzt das System die Buchstabenfolge automatisch bis zur nächsten Mehrdeutigkeit. Nachteilig an dem bekannten Verfahren ist, daß diese Art der Einzeleingabe sehr mühselig ist, da trotz der optischen Hervorhebung dennoch stets mit dem Drehknopf das Alphabet durchfahren werden muß.

Aus der US 5, 059, 965 ist ein Verfahren zur Auswahl alphanumerischer Datensätze bekannt, bei dem die jeweils möglichen Eingaben in einem zum Eingabefeld senkrechten Rahmen oder Speller angeordnet sind. Mittels eines Eingabeelementes kann dann der

Nutzer den Speller solange bewegen, bis der gewünschte Buchstabe im Eingabefeld steht und dieser in das Navigationssystem übernommen wird. Auch eine automatische Ergänzung bei Eindeutigkeit des nächsten nachfolgenden Buchstabens ist vorgesehen. Da im Rahmen nur die möglichen Buchstaben dargestellt werden, ist diese Eingabe etwas schneller und komfortabler als in der EP 0 366 132 B1.

Aus der EP 0 747 835 A1 ist ein Verfahren und eine Vorrichtung zur Auswahl alphanumerischer Datensätze bekannt, wo mittels eines Eingabeelementes Listen durchgescrollt werden. Dabei werden verschiedene Scroll - Methoden angeboten, um die Suche zu beschleunigen, wobei beispielsweise ein oder mehrere Buchstaben ausgewählt werden, so daß nur noch die Datensätze mit diesen Buchstaben angezeigt und durchgescrollt werden müssen

Der Erfindung liegt daher das technische Problem zugrunde, ein Verfahren und eine Vorrichtung zur Auswahl alphanumerischer Datensätze zu schaffen, die eine benutzerfreundlichere Bedienung ermöglichen.

Die Lösung des technischen Problems ergibt sich durch die Gegenstände mit den Merkmalen der Patentansprüche 1 und 6. Weitere vorteilhafte Ausgestaltungen der Erfindung ergeben sich aus den Unteransprüchen.

Erfindungsgemäß wird nach Eingabe eines ersten alphanumerischen Zeichens der Speicher mit den abgelegten Datensätzen nach Datensätzen durchsucht, die an erster Stelle dieses Zeichen aufweisen. Ist die Anzahl der gefundenen Datensätze kleiner als ein vorgegebener Wert, so werden die Datensätze auf der Anzeigeeinheit dargestellt und der Nutzer kann den gewünschten Datensatz über die Eingabeeinheit auswählen. Der Wert wird dabei vorzugsweise derart gewählt, daß alle Datensätze auf der Anzeigeeinheit sichtbar darstellbar sind. Ergab das Suchergebnis hingegen eine größere Anzahl in Frage kommender Datensätze, so wird im Modus der sukzessiven Zeicheneingabe fortgefahren. Dadurch ergibt sich eine für den Nutzer übersichtliche und schnelle Eingabe, da diesem zum einen eine vollständige sukzessive Eingabe erspart bleibt und zum anderen nicht endlose Listen durchscrollt werden müssen. Die Vorrichtung wählt vielmehr in Abhängigkeit vom Suchergebnis das geeignete Eingabeverfahren aus.

In einer bevorzugten Ausführungsform wird bei einem Suchergebnis mit einer größeren Anzahl als der vorgegebene Wert vom Prozessor erfaßt, welche Zeichen nachfolgend überhaupt nur auftreten können. Diese möglichen Zeichen werden dann auch ausschließlich als Eingabeoption dargestellt, was den Auswahlvorgang weiter beschleunigt, da nicht bei jeder Eingabe das ganze Alphabet durchfahren werden muß.

In einer weiteren bevorzugten Ausführungsform werden die möglichen Zeichen in einem Speller angeordnet, der senkrecht zum Eingabefeld angeordnet ist und an der einzugebenden Position das Eingabefeld schneidet. Die Anordnung im Speller kann dabei alphabetisch oder nach auftretender Häufigkeit erfolgen. Vorzugsweise ist die Ordnung alphabetisch, wobei der Speller derart verschoben ist, daß das Zeichen mit der höchsten Eingabewahrscheinlichkeit im Eingabefeld steht.

In einer weiteren bevorzugten Ausführungsform ergänzt der Prozessor automatisch die Eingabe, falls ein nachfolgendes Zeichen eindeutig ist. Diese Ergänzung wird bis zur nächsten Mehrdeutigkeit fortgeführt.

Die Erfindung wird nachfolgend anhand eines bevorzugten Ausführungsbeispieles näher erläutert. Die Fig. zeigen:
- Fig. 1: eine Darstellung einer Eingabeoption im Spellermodus und
- Fig. 2: eine Darstellung einer Eingabeoption im Listenauswahlmodus.

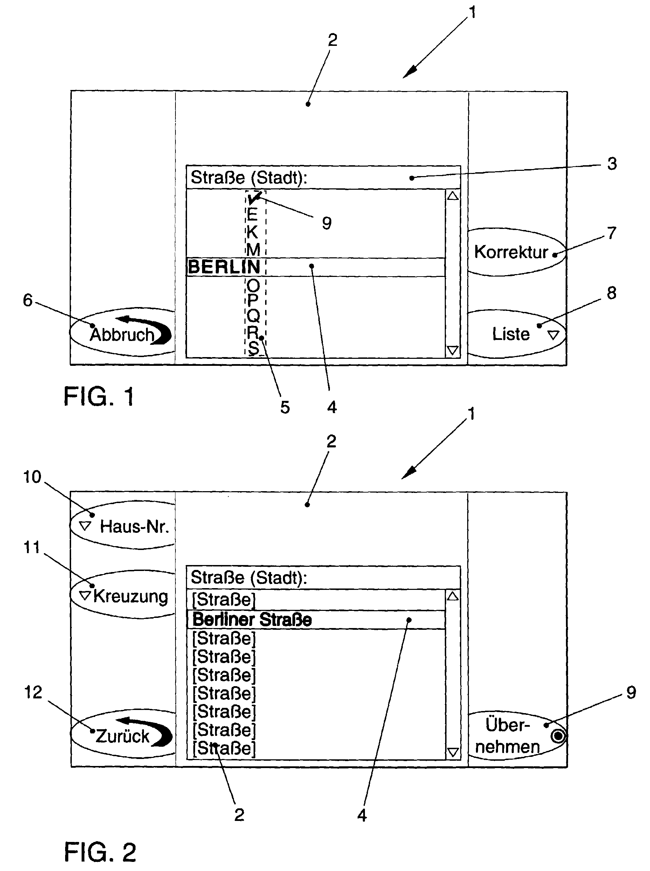

In der Fig. 1 ist eine Anzeigeeinheit 1 dargestellt. Die Anzeigeeinheit 1 umfaßt einen Bereich 2 für Eingaben eines Straßennamens in ein Navigationssystem. Der Bereich 2 umfaßt eine Statuszeile 3, ein Eingabefeld 4 und einen Speller 5. Seitlich vom Bereich 2 sind Bedienelemente 6 bis 8 angeordnet. Im Eingabefeld 4 stehen bereits die Buchstaben "BERLI", die zuvor ausgewählt und übernommen wurden. Der Speller 5 ist senkrecht zum Eingabefeld 4 angeordnet und schneidet das Eingabefeld 4 an der Stelle, wo die nächste alphanumerische Eingabe erwartet wird. In dem Speller 5 sind nur die Buchstaben dargestellt, die für die Eingabe möglich sind. Hierzu hat ein nicht dargestellter Prozessor zuvor seinen vorhandenen Datensätzen auf Straßennamen mit dem Anfang "BERLI" durchsucht. Das Suchergebnis ergab dabei, daß die Anzahl der möglichen Datensätze größer als ein vorgegebener Wert ist, so daß diese nicht vollständig im Bereich 2 darstellbar wären. Des weiteren hat der Prozessor erfaßt, daß aufgrund seiner erfaßten Datensätze der nachfolgende Buchstabe ein E, K, M, N, O, P, R, oder S sein muß. Diese möglichen Buchstaben sind ausschließlich im Speller 5 dargestellt. Des weiteren ist im Speller 5 ein Sonderzeichen 9 dargestellt, bei dessen Auswahl der Nutzer die Automatik abbrechen kann und in eine Listenauswahl unabhängig von der Anzahl der darzustellenden Datensätze wechseln kann. Mittels eines nicht dargestellten Bedienelementes, das beispielsweise als Druck- Dreh-Schalter ausgebildet ist, kann dann der Nutzer den Speller 5 relativ zum Eingabefeld 4 bewegen, bis der gewünschte Buchstabe im Eingabefeld 4 steht und über eine Enter - Funktion in das Eingabefeld 4 übernommen wird. Im dargestellten Beispiel wäre dies somit die Eingabe "BERLIN". Der Prozessor überprüft nun zunächst, wieviele Datensätze mit dem Präfix "BERLIN" in seinem Straßenregister vorhanden sind. Ist die Anzahl kleiner als der vorgegebene Wert, so wechselt der Prozessor in eine Listenauswahl gemäß Fig. 2, ansonsten wiederholt sich das zuvor beschriebene Verfahren. Mittels des Bedienelementes 6 kann der Nutzer die Zieleingabe abbrechen und zur nächsthöheren Menüebene zurückkehren. Mittels des Bedienelementes 7 können einzelne alphanumerische Eingaben korrigiert werden und durch das Bedienelement 8 kann der Nutzer analog der Auswahl des Sonderzeichens 9 in den Listenauswahlmodus wechseln.

In der Fig. 2 ist schematisch eine derartige Listenauswahl dargestellt. Der Nutzer kann nun mit dem Bedienelement das Eingabefeld 4 auf die gewünschte Straßen bewegen und diese über das Bedienelement 9 in das Navigationssystem übernehmen. Möchte der Nutzer hingegen seine Eingabe weiter spezifizieren, so kann er dies über die Bedienelemente 10 oder 11 tun. Nach Betätigung des Bedienelementes 11 werden beispielsweise alle Kreuzungsstraßen der ausgewählten Straße dargestellt und der Nutzer kann dann entsprechend die Straßenkreuzung als Ziel in das Navigationssystem übernehmen. Stellt hingegen der Nutzer fest, daß in der dargestellten Liste die gewünschte Straße nicht vorhanden ist bzw. er mittels des Sonderzeichens 9 zu früh in die Listendarstellung gewechselt hat, so kann der Nutzer mittels des Bedienelementes 12 wieder in die Speller - Darstellung gemäß Fig. 1 wechseln und dort gegebenenfalls Korrekturen vornehmen. Des weiteren ist es möglich mit Platzhaltern oder mit Wild Characters zu arbeiten, wie dies prinzipiell schon in der US-5, 059, 965 vorgeschlagen wurde.

## Patentansprüche

1. Verfahren zur Auswahl alphanumerischer Datensätze, insbesondere zur Zielauswahl für Navigationssysteme oder Rufnummernauswahl für Telefonsysteme, mittels mindestens eines Prozessors, einer Anzeigeeinheit (1) und Eingabeeinheit, umfassend folgende Verfahrensausschnitte:
a) Darstellen von alphanumerischen Zeichen auf der Anzeigeeinheit (1), aus denen mittels der Eingabeeinheit ein Zeichen auswählbar ist,
b) Erfassen des eingegebenen Zeichens durch den Prozessor,
c) Durchsuchen der vorhandenen Datensätze nach dem erfaßten Zeichen,
d) Darstellen der gefundenen Datensätze auf der Anzeigeeinheit (1), falls die Anzahl der Datensätze kleiner als ein vorgegebener Wert ist, oder auffordern zur Eingabe weiterer Zeichen solange, bis die Anzahl der möglichen Datensätze unter dem vorgegebenen Wert liegt.

2. Verfahren nach Anspruch 1, dadurch gekennzeichnet, daß der Prozessor bei einer erfaßten Anzahl von Datensätzen größer als der vorgegebenen Wert die möglichen nachfolgenden Zeichen erfaßt und ausschließlich diese auf der Anzeigeeinheit (1) als Eingabeoption darstellt.

3. Verfahren nach Anspruch 1 oder 2, dadurch gekennzeichnet, daß die nachfolgend eingebbaren Zeichen in einem zu einem Eingabefeld (4) senkrechten Speller (5) angeordnet sind.

4. Verfahren nach Anspruch 3, dadurch gekennzeichnet, daß das Zeichen mit der größten Eingabewahrscheinlichkeit im Speller (5) an der Stelle im Eingabefeld (4) angeordnet ist.

5. Verfahren nach Anspruch 4, dadurch gekennzeichnet, daß falls das nachfolgende Zeichen eindeutig ist, der Prozessor automatisch das Zeichen setzt und mit dem nächsten mehrdeutigen Zeichen fortfährt.

6. Vorrichtung zur Durchführung des Verfahrens nach Anspruch 1, umfassend einen Prozessor, einen Datenspeicher mit abgelegten Datensätzen, eine Anzeigeeinheit (1) und eine Eingabeeinheit, wobei der Prozessor einen Suchalgorithmus umfaßt, mittels dessen in Abhängigkeit von einer alphanumerischen Zeicheneingabe über die Eingabe der Datenspeicher nach möglichen Datensätzen durchsuchbar ist, wobei in Abhängigkeit von Suchergebnis der Eingabemodus auf der Anzeigeeinheit (1) zwischen einer sukzessiven alphanumerischen Zeicheneingabe und einer Listenauswahl wechselbar ist.
